# EUROPEAN PATENT APPLICATION

(11) **EP 3 805 585 A1**
(43) Date of publication of application: **14.04.2021**
(21) Application number: 19834127.3
(22) Date of filing: 26.06.2019
(51) Int. Cl.: F16D 13/60, F16D 25/063, F16D 25/0638

(54) **VEHICULAR POWER TRANSMISSION DEVICE**

(30) Priority: 12.07.2018 JP 2018132070
(71) Applicant: MAZDA MOTOR CORPORATION, Hiroshima 730-8670 (JP)
(72) Inventor: SASAKI Masanori, Aki-gun Hiroshima 7308670 (JP); YAMADA Kazuhiro, Aki-gun Hiroshima 7308670 (JP); ENOKI Hiroyuki, Aki-gun Hiroshima 7308670 (JP); KATAYAMA Sayaka, Aki-gun Hiroshima 7308670 (JP); OKUMURA Shinya, deceased (JP); MIURA Yasuo, Aki-gun Hiroshima 7308670 (JP); KOUNO Hirokazu, Aki-gun Hiroshima 7308670 (JP); MORIHIRO Masashi, Aki-gun Hiroshima 7308670 (JP); TANAKA Takeyuki, Aki-gun Hiroshima 7308670 (JP)
(74) Representative: Thoma, Michael
(86) International application number: PCT/JP2019/025390
(87) International publication number: WO 2020/012963

(57) **Abstract**

A vehicular power transmission device (an automatic transmission (1)) includes a drum (30). A power transmission section (35) of the drum is configured to include plural coupling members (36) that couple a first annular section (31) and a second annular section (32). Each of the coupling members has: a first rod-like coupling section (36a) that is coupled to the first annular section and extends from the first annular section toward the second annular section; a second rod-like coupling section (36b) that is provided in a manner to offset in a circumferential direction and an axial direction of the drum with respect to the first rod-like coupling section, is coupled to the second annular section, and extends from the second annular section toward the first annular section; and an intermediate coupling section (36c) that couples an end portion on the second annular section side of the first rod-like coupling section and an end portion on the first annular section side of the second rod-like coupling section.

## Description

### Technical Field

A technique disclosed in the present application relates to a vehicular power transmission device that includes a cylindrical drum for transmitting power in a rotational direction.

### Background Art

In general, an automatic transmission that is mounted on a vehicle such as an automobile includes a friction fastening element (a brake or a clutch). This friction fastening element has a cylindrical drum (a brake drum or a clutch drum) that transmits power in a rotational direction. Plural friction plates are attached to this drum, and these friction plates are engaged with plural friction plates that are attached to a clutch hub, for example. In this way, the friction fastening element is engaged.

There is a case where a circumferential wall of the drum as described above is formed with plural holes. For example, a power transmission device including a transmission is disclosed in Patent Literature 1. The power transmission device includes a support member that supports a counter-drive gear, to which power from the transmission is transmitted, in a freely rotatable manner. The support member has a cylindrical drum section that functions as a brake drum of a friction fastening element. The brake drum connects a rotary element of the transmission to a transmission case so as to prevent rotation of the rotary element. This drum section is formed with plural holes.

### Citation List

### Patent Literature

Patent Literature 1: JP-A-2016-70330

### Summary of Invention

### Technical Problem

The drum of the friction fastening element as described above has such a problem that inertia thereof is significant due to a relatively large diameter and heavy weight, which extends a gearshift time. In addition, the automatic transmission has such a problem that, since the plural friction fastening elements are generally provided thereto, weight of the entire automatic transmission is increased, which degrades fuel economy of the vehicle. In particular, in a case of an FR vehicle, the drum of the friction fastening element tends to be elongated in an axial direction. As a result, a weight reduction and reduced inertia are strongly requested for the drum.

To handle such problems, as disclosed in above Patent Literature 1, it is considered to form the holes in the circumferential wall of the drum in order to reduce the weight and the inertia of the drum.

However, the formation of the holes in the circumferential wall of the drum is insufficient for the weight reduction and the reduced inertia of the drum. Thus, drastic improvement is desired.

A technique disclosed herein has been made in view of such a point and therefore has a purpose of providing a vehicular power transmission device, such as an automatic transmission, that includes a cylindrical drum for transmitting power in a rotational direction, the vehicular power transmission device capable of significantly reducing weight and inertia of the drum.

### Solution to Problem

In order to achieve the above purpose, the following vehicular power transmission device is provided.

The vehicular power transmission device includes a cylindrical drum that transmits power in a rotational direction. The drum has: a first annular section and a second annular section that are located at two mutually-separated positions in an axial direction of the drum; and a power transmission section between the first annular section and the second annular section, the power transmission section transmitting the power input to the first annular section or the second annular section. The power transmission section is configured to include plural coupling members that are arranged around a center axis of the drum and couple the first annular section and the second annular section. Each of the coupling members has: a first rod-like coupling section that is coupled to the first annular section and extends from the first annular section toward the second annular section; a second rod-like coupling section that is provided in a manner to offset in a circumferential direction and the axial direction of the drum with respect to the first rod-like coupling section, is coupled to the second annular section, and extends from the second annular section toward the first annular section; and an intermediate coupling section that couples an end portion on the second annular section side of the first rod-like coupling section and an end portion on the first annular section side of the second rod-like coupling section.

With the above configuration, the power transmission section between the first annular section and the second annular section of the drum is configured to include the plural coupling members, each of which has the first rod-like coupling section, the second rod-like coupling section, and the intermediate coupling section. Thus, it is possible to significantly reduce weight and inertia of the drum by reducing the number of the coupling members to be as small as possible.

Here, during the power transmission by the power transmission section, torque is applied to the first annular section in a direction on one side in the circumferential direction of the drum, and torque (magnitudes of such torque are the same) is applied to the second annular section in a direction on the other side in the circumferential direction. As a result, rotation moment is generated to each of the coupling members, which twists (rotates) each of the coupling members. In the case where the coupling member does not have the intermediate coupling section and extends linearly from the first annular section to the second annular section, stress is possibly concentrated on an end portion on the first annular section side and an end portion on the second annular section side of the coupling member by the above torque, and the end portion on the first annular section side or the end portion on the second annular section side of the coupling member is possibly damaged.

However, the first rod-like coupling section and the second rod-like coupling section are coupled to each other via the intermediate coupling section. Thus, when each of the coupling members is twisted by the above torque, the intermediate coupling section is deformed in the axial direction of the drum. As a result, the stress applied to the end portion on the first annular section side and the end portion on the second annular section side of the coupling member is dispersed to the intermediate coupling section, and the stress can thereby be reduced. Therefore, it is possible to prevent the damage to the coupling members even when the number of the coupling members is reduced.

As a result, it is possible to significantly reduce the weight and the inertia of the drum while the power transmission section reliably transmits the power.

In the vehicular power transmission device, the intermediate coupling section is preferably formed integrally with the first rod-like coupling section and the second rod-like coupling section.

In this way, it is possible to reduce the number of components and to easily provide the coupling member.

In an aspect of the vehicular power transmission device, during the power transmission by the power transmission section, torque is applied to the first annular section in a direction on one side in the circumferential direction, and torque is applied to the second annular section in a direction on the other side in the circumferential direction, and the first rod-like coupling sections and the second rod-like coupling sections of all the coupling members extend from the first annular section side toward the second annular section side in the axial direction in a manner to be tilted to the same side as the direction of the torque applied to the first annular section.

In this way, it is possible to further reduce the number of the coupling members while effectively preventing the damage to the coupling members by the torque applied to the first annular section and the second annular section.

In another aspect of the vehicular power transmission device, a first state and a second state are provided during the power transmission by the power transmission section. In the first state, the torque is applied to the first annular section in the direction on the one side in the circumferential direction, and the torque is applied to the second annular section in the direction on the other side in the circumferential direction In the second state, the torque is applied to the first annular section and the second annular section in opposite directions from those in the first state. While the first rod-like coupling section and the second rod-like coupling section of some coupling member of the plural coupling members extend from the first annular section side toward the second annular section side in the axial direction in a manner to be tilted to the one side in the circumferential direction, the first rod-like coupling section and the second rod-like coupling section of the rest of the coupling section extend from the first annular section side toward the second annular section side in the axial direction in a manner to be tilted to the other side in the circumferential direction.

In this way, regardless of whether an application state of the torque to the first annular section and the second annular section is the first state or the second state, it is possible to effectively prevent the damage to the coupling members by the torque applied to the first annular section and the second annular section.

In the above aspect or the above other aspect, the first rod-like coupling section and the second rod-like coupling section of each of the coupling members are preferably coupled to mutually-opposing surfaces in the axial direction of the first annular section and the second annular section. A reinforcing section is preferably provided to a corner section between the opposing surface of the first annular section and a surface on a side, which defines an acute angle with the opposing surface of the first annular section, of surfaces on the one side and the other side in the circumferential direction of the first rod-like coupling section in each of the coupling members and/or a corner section between the opposing surface of the second annular section and a surface on a side, which defines an acute angle with the opposing surface of the second annular section, of surfaces on the one side and the other side in the circumferential direction of the second rod-like coupling section in each of the coupling members.

In this way, it is possible to further effectively prevent the damage to the rod-shaped coupling member by the torque by reinforcing the portions, which is likely to be damaged by the torque applied to the first annular section and the second annular section, (the portions where the stress is likely to be concentrated) in the coupling member.

In the vehicular power transmission device, the intermediate coupling sections of the plural coupling members are preferably connected to each other to serve as an annular member that extends in the entire circumferential direction of the drum.

In this way, it is possible to prevent the damage to each of the intermediate coupling sections of the plural coupling members by the torque applied to the first annular section and the second annular section. In addition, even when the coupling member attempts to be displaced to a radially outer side of the drum by a centrifugal force during rotation of the drum, displacement thereof is suppressed by the annular member. As a result, it is possible to prevent the damage to the coupling member by the centrifugal force.

### Advantageous Effects of Invention

As it has been described so far, according to the vehicular power transmission device, it is possible to significantly reduce weight and inertia of the drum while the power transmission section reliably transmits the power.

### Brief Description of Drawings

[Fig. 1] Fig. 1 is a skeleton view of an example of an automatic transmission as a vehicular power transmission device according to an exemplary embodiment.
[Fig. 2] Fig. 2 is a fastening table that illustrates a fastened state of a friction fastening element at each gear stage of the automatic transmission.
[Fig. 3] Fig. 3 is a cross-sectional view of clutch drums of a second clutch and a third clutch in the mounted state on the automatic transmission.
[Fig. 4] Fig. 4 is a perspective view illustrating a drum according to a first embodiment.
[Fig. 5] Fig. 5 is a view in which the drum illustrated in Fig. 4 is seen from a radially outer side thereof.
[Fig. 6] Fig. 6 is a view illustrating a drum according to a second embodiment and corresponding to Fig. 4.
[Fig. 7] Fig. 7 is a view illustrating the drum in Fig. 6 and corresponding to Fig. 5.

### Description of Embodiments

A description will hereinafter be made on an exemplary embodiment with reference to the drawings.

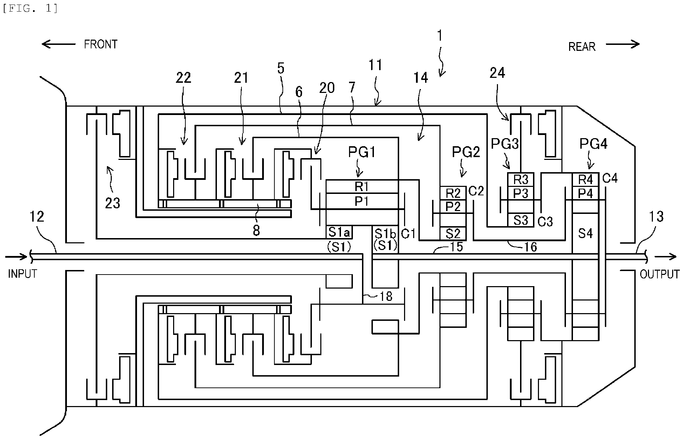

Fig. 1 illustrates an example of an automatic transmission 1 as a vehicular power transmission device according to the exemplary embodiment. This automatic transmission 1 is a vertically-arranged automatic transmission that is mounted on a vehicle of an FR type.

The automatic transmission 1 has: a transmission case 11; an input shaft 12 that is inserted in the transmission case 11 and receives power from a drive source (an engine, a motor, or the like) of the vehicle; a gear shift mechanism 14 which is accommodated in the transmission case 11 and to which the power from the drive source is transmitted via the input shaft 12; and an output shaft 13 that is inserted in the transmission case 11 and outputs the power from the gear shift mechanism 14 to a propeller shaft.

The input shaft 12 and the output shaft 13 are coaxially arranged along a vehicle longitudinal direction. In a state where the automatic transmission 1 is mounted on the vehicle, the input shaft 12 is located on a vehicle front side, and the output shaft 13 is located on a vehicle rear side. In the following description, the drive source side (a left side in Fig. 1 and the vehicle front side) in an axial direction of the input shaft 12 (an axial direction of the output shaft 13) will be referred to as a front side, and an opposite side (a right side in Fig. 1 and the vehicle rear side) from the drive source in the axial direction of the input shaft 12 will be referred to as a rear side.

The gear shift mechanism 14 has a first planetary gear set PG1 (hereinafter referred to as a first gear set PG1), a second planetary gear set PG2 (hereinafter referred to as a second gear set PG2), a third planetary gear set PG3 (hereinafter referred to as a third gear set PG3), and a fourth planetary gear set PG4 (hereinafter referred to as a fourth gear set PG4) that are aligned in the axial direction of the input shaft 12. These first gear set PG1, second gear set PG2, third gear set PG3, and fourth gear set PG4 are aligned in this order from the front side to constitute plural power transmission paths from the input shaft 12 to the output shaft 13. The first to fourth gear sets PG1 to PG4 are arranged on the same axis as the input shaft 12 and the output shaft 13.

The first gear set PG1 has, as rotary elements, a first sun gear S1, a first ring gear R1, and a first carrier C1. The first gear set PG1 is of a single-pinion type including plural pinions P1 that are supported by the first carrier C1 and arranged at mutually-spaced intervals in a circumferential direction of the first gear set PG1. The plural pinions P1 mesh with both of the first sun gear S1 and the first ring gear R1.

The second gear set PG2 has, as rotary elements, a second sun gear S2, a second ring gear R2, and a second carrier C2. The second gear set PG2 is also of the single-pinion type including plural pinions P2 that are supported by the second carrier C2 and arranged at mutually-spaced intervals in a circumferential direction of the second gear set PG2. The plural pinions P2 mesh with both of the second sun gear S2 and the second ring gear R2.

The third gear set PG3 has, as rotary elements, a third sun gear S3, a third ring gear R3, and a third carrier C3. The third gear set PG3 is also of the single-pinion type including plural pinions P3 that are supported by the third carrier C3 and arranged at mutually-spaced intervals in a circumferential direction of the third gear set PG3. The plural pinions P3 mesh with both of the third sun gear S3 and the third ring gear R3.

The fourth gear set PG4 has, as rotary elements, a fourth sun gear S4, a fourth ring gear R4, and a fourth carrier C4. The fourth gear set PG4 is also of the single-pinion type including plural pinions P4 that are supported by the fourth carrier C4 and arranged at mutually-spaced intervals in a circumferential direction of the fourth gear set PG4. The plural pinions P4 mesh with both of the fourth sun gear S4 and the fourth ring gear R4.

The first sun gear S1 in the first gear set PG1 is divided into two in the axial direction of the input shaft 12, and has: a front-side first sun gear S1a that is arranged on the relatively front side; and a rear-side first sun gear S1b that is arranged on the relatively rear side. That is, the first gear set PG1 is a gear set of a double sun gear type. The front-side and rear-side first sun gears S1a, S1b have the same number of teeth and mesh with the pinions P1 that are supported by the first carrier C1. Thus, rotational speeds of these front-side and rear-side first sun gears S1a, S1b are always equal to each other. That is, the front-side and rear-side first sun gears S1a, S1b always rotate at the same rotation speed. When rotation of one of the gears is stopped, rotation of the other gear is also stopped.

The first sun gear S1 (more strictly, the rear-side first sun gear S1b) and the fourth sun gear S4 are always coupled to each other. The first ring gear R1 and the second sun gear S2 are always coupled to each other. The second carrier C2 and the fourth carrier C4 are always coupled to each other. The third carrier C3 and the fourth ring gear R4 are always coupled to each other. The input shaft 12 is always coupled to the first carrier C1. The output shaft 13 is always coupled to the fourth carrier C4. More specifically, the input shaft 12 is coupled to the first carrier C1 via a power transmission member 18 that runs between the front-side and rear-side first sun gears S1a, S1b. The rear-side first sun gear S1b and the fourth sun gear S4 are coupled to each other via a power transmission shaft 15. The second carrier C2 and the fourth carrier C4 are coupled to each other via a power transmission member 16.

The gear shift mechanism 14 has five friction fastening elements (a first clutch 20, a second clutch 21, a third clutch 22, a first brake 23, and a second brake 24) used to select one of the plural power transmission paths, which are provided by the first to fourth gear sets PG1 to PG4, and switch the power transmission path.

The first clutch 20 is configured to engage/disengage the third sun gear S3 with/from each of the input shaft 12 and the first carrier C1. The first clutch 20 is disposed on a front side of the first gear set PG1.

The second clutch 21 is configured to engage/disengage the third sun gear S3 with/from each of the first ring gear R1 and the second sun gear S2. The second clutch 21 is disposed on a front side of the first clutch 20.

The third clutch 22 is configured to engage/disengage the second ring gear R2 with/from the third sun gear S3. The third clutch 22 is disposed on a front side of the second clutch 21.

The third sun gear S3 is coupled to each of the first clutch 20, the second clutch 21, and the third clutch 22 via a coupling member 5 or a coupling member 8. The second clutch 21 is coupled to each of the first ring gear R1 and the second sun gear S2 via a clutch drum 6 of the second clutch 21. The second ring gear R2 and the third clutch 22 are coupled to each other via a clutch drum 7 of the third clutch 22.

The first brake 23 is configured to engage/disengage the first sun gear S1 (more strictly, the front-side first sun gear S1a) with/from the transmission case 11. The first brake 23 is arranged at a position near the transmission case 11 and on a front side of the third clutch 22. When the first brake 23 is fastened, the first sun gear S1 is fixed to the transmission case 11.

The second brake 24 is configured to engage/disengage the third ring gear R3 with/from the transmission case 11. The second brake 24 is arranged at a position near the transmission case 11 and on a front side of the third gear set PG3. When the second brake 24 is fastened, the third ring gear R3 is fixed to the transmission case 11.

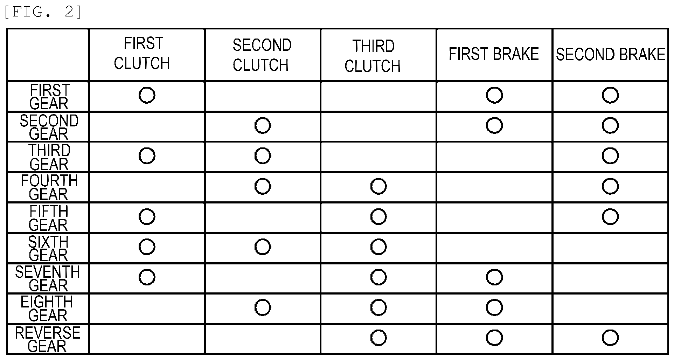

Each of the above friction fastening elements is fastened when hydraulic oil is supplied to a fastening hydraulic chamber in respective one of the friction fastening elements. As illustrated in a fastening table in Fig. 2, three friction fastening elements of the five friction fastening elements are selectively fastened, so as to set one of first to eighth forward gears and a reverse gear. In the fastening table in Fig. 2, a symbol "circle" indicates that the friction fastening element is fastened, and a blank column indicates that fastening of the friction fastening element is canceled (released).

More specifically, the first gear is set by fastening the first clutch 20, the first brake 23, and the second brake 24. The second gear is set by fastening the second clutch 21, the first brake 23, and the second brake 24. The third gear is set by fastening the first clutch 20, the second clutch 21, and the second brake 24. The fourth gear is set by fastening the second clutch 21, the third clutch 22, and the second brake 24. The fifth gear is set by fastening the first clutch 20, the third clutch 22, and the second brake 24. The sixth gear is set by fastening the first clutch 20, the second clutch 21, and the third clutch 22. The seventh gear is set by fastening the first clutch 20, the third clutch 22, and the first brake 23. The eighth gear is set by fastening the second clutch 21, the third clutch 22, and the first brake 23. The reverse gear is set by fastening the third clutch 22, the first brake 23, and the second brake 24. At the sixth gear, the rotational speed of the input shaft 12 is equal to the rotational speed of the output shaft 13.

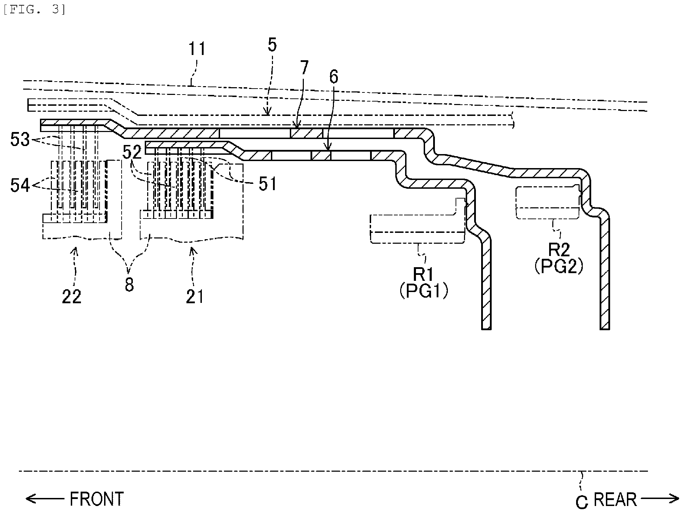

Fig. 3 specifically illustrates the clutch drums 6, 7 in a mounted state on the automatic transmission 1. In Fig. 3, a center axis of the input shaft 12 (a center axis of the output shaft 13) is denoted by C and matches center axes of the clutch drums 6, 7 (a center axis L of a drum 30, which will be described below). An axial direction of the clutch drums 6, 7 matches the axial direction of the input shaft 12 (the axial direction of the output shaft 13).

The clutch drum 6 is a clutch drum for the second clutch 21 and is located on a radially inner side of the coupling member 5. This clutch drum 6 is formed in a bottomed cylindrical shape that is opened to the front side and has a rear end portion as a bottom portion. The rear end portion (the bottom portion) of the clutch drum 6 is coupled to the first ring gear R1 of the first gear set PG1. A circumferential wall of the clutch drum 6 has a front end portion, and plural friction plates 51 are attached to an inner circumferential surface of the front end portion. When the second clutch 21 is fastened, these friction plates 51 are engaged with plural friction plates 52 that are attached to the coupling member 8 in an alternately arranged manner with the friction plates 51. In a fastened state of the second clutch 21, the clutch drum 6 transmits power in a rotational direction from the first ring gear R1 to the third sun gear S3.

The clutch drum 7 is a clutch drum for the third clutch 22 and is located on a radially inner side of the coupling member 5 and on a radially outer side of the clutch drum 6. Similar to the clutch drum 6, this clutch drum 7 is also formed in the bottomed cylindrical shape that is opened to the front side and has a rear end portion as a bottom portion. The rear end portion (the bottom portion) of the clutch drum 7 is coupled to the second ring gear R2 of the second gear set PG2. A circumferential wall of the clutch drum 7 has a front end portion, and plural friction plates 53 are attached to an inner circumferential surface of the front end portion. When the third clutch 22 is fastened, these friction plates 53 are engaged with plural friction plates 54 that are attached to the coupling member 8 in an alternately arranged manner with the friction plates 53. In a fastened state of the third clutch 22, the clutch drum 7 transmits the power in the rotational direction from the second ring gear R2 to the third sun gear S3.

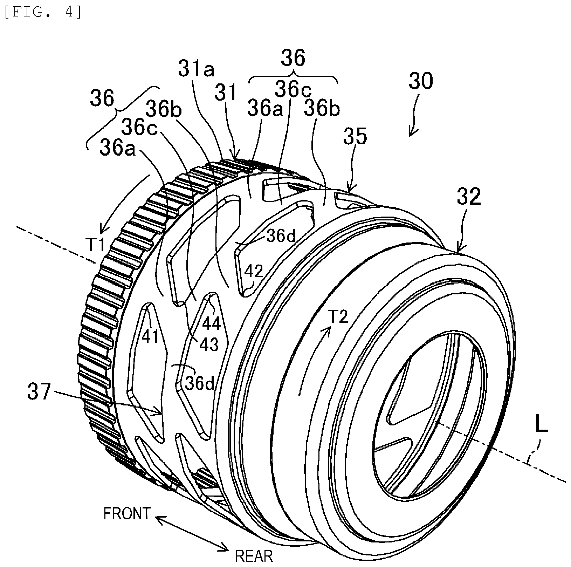

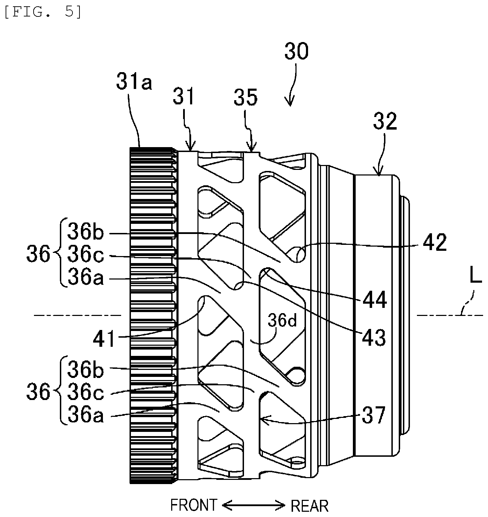

A detailed description will hereinafter be made on configurations of the clutch drum 6 and the clutch drum 7 by using the drum 30 (having the same shape as the clutch drum 6) according to a first embodiment, which is illustrated in Fig. 4 and Fig. 5. A configuration of this drum 30 is applied to the clutch drum 6 and the clutch drum 7. In the following description of the drum 30, "front" and "rear" are respectively the same as "front" and "rear" in a state where the drum 30 is mounted as the clutch drum 6 and the clutch drum 7 on the automatic transmission 1.

### (First Embodiment)

Fig. 4 and Fig. 5 illustrate the drum 30 according to the first embodiment. In this embodiment, the drum 30 has a first annular section 31 and a second annular section 32 that are located at two mutually-separated positions in an axial direction of the drum 30 (hereinafter referred to as a drum axial direction). In this embodiment, the first annular section 31 is a front end portion and a portion near the front end portion of a circumferential wall of the drum 30, and the second annular section 32 is a portion near a rear end portion (a bottom portion) of the circumferential wall of the drum 30.

A spline section 31a is provided in a front portion of the first annular section 31. In this embodiment, the first annular section 31 has a thin plate shape. Accordingly, on both of an inner circumferential surface and an outer circumferential surface of the first annular section 31, projections and recesses, each of which extends in the drum axial direction, are alternately arranged in a circumferential direction of the drum 30 (hereinafter referred to as a drum circumferential direction). On the outer circumferential surface of the first annular section 31, the recesses are located in portions corresponding to the projections on the inner circumferential surface, and the projections are located in portions corresponding to the recesses on the inner circumferential surface. The plural friction plates 51 are splinefitted to an inner circumferential surface side of the spline section 31a of the first annular section 31.

An outer diameter of a front end portion of the second annular section 32 is substantially the same as an outer diameter of the rear end portion of the first annular section 31. An outer diameter of a portion other than the front end portion of the second annular section 32 is smaller than the outer diameter of the front end portion.

The drum 30 further has a power transmission section 35 between the first annular section 31 and the second annular section 32. The power transmission section 35 transmits the power in the rotational direction that is input to the first annular section 31 or the second annular section 32. In this embodiment, the power transmission section 35 transmits the power, which has been transmitted to the second annular section 32, from the second annular section 32 to the first annular section 31.

The power transmission section 35 is configured to include plural (eight in this embodiment) coupling members 36 that are arranged around the center axis L of the drum 30 and couple the first annular section 31 to the second annular section 32. In this embodiment, on an imaginary cylindrical surface having an outer diameter that is substantially the same as the outer diameter of the rear end portion of the first annular section 31 (that is, an outer diameter that is substantially the same as the front end portion of the second annular section 32), the plural coupling members 36 are arranged at spaced intervals in the drum circumferential direction.

Each of the coupling members 36 has a first rod-like coupling section 36a, a second rod-like coupling section 36b, and an intermediate coupling section 36c. These first rod-like coupling section 36a, second rod-like coupling section 36b, and intermediate coupling section 36c are formed integrally with each other.

The first rod-like coupling section 36a is coupled to the first annular section 31 and extends to a position of the intermediate coupling section 36c (in this embodiment, a center between the first annular section 31 and the second annular section 32) from the first annular section 31 toward the second annular section 32.

The second rod-like coupling section 36b is coupled to the second annular section 32 and extends to the position of the intermediate coupling section 36c from the second annular section 32 toward the first annular section 31. The second rod-like coupling section 36b is provided in a manner to offset in the drum circumferential direction and the drum axial direction with respect to the first rod-like coupling section 36a. In this embodiment, the second rod-like coupling section 36b is offset to the same side as a direction of torque T2, which will be described below, in the drum circumferential direction with respect to the first rod-like coupling section 36a.

The intermediate coupling section 36c is located in the middle between the first annular section 31 and the second annular section 32 (in this embodiment, the center between the first annular section 31 and the second annular section 32), and extends in the drum circumferential direction so as to couple an end on the second annular section 32 side of the first rod-like coupling section 36a and an end on the first annular section 31 side of the second rod-like coupling section 36b. In this embodiment, the intermediate coupling sections 36c of the plural coupling members 36 are connected to each other via extending sections 36d so as to serve as an annular member 37 that extends in the entire drum circumferential direction. That is, the annular member 37 couples the plural coupling members 36 to each other in the middle between the first annular sections 31 and the second annular sections 32.

Here, in the case where the plural coupling members 36 are not coupled to each other, each of the coupling members 36 is displaced to a radially outer side of the drum by a centrifugal force during rotation of the drum 30. Then, due to this displacement, the end portion on the first annular section 31 side or the end portion on the second annular section 32 side of each of the coupling members 36 is possibly damaged. Alternatively, in this embodiment, the first annular section 31 has the thin plate shape. Accordingly, due to the above displacement, the spline section 31a of the first annular section 31 possibly expands in a drum radial direction while stretching in the drum circumferential direction (while heights of the projections or depths of the recesses are reduced).

However, in this embodiment, the plural coupling members 36 are coupled to each other by the annular member 37. Thus, the above displacement is suppressed, which can prevent the damage to the coupling members 36 caused by the centrifugal force. In addition, it is possible to prevent the spline section 31a of the first annular section 31 from expanding in the drum radial direction while stretching in the drum circumferential direction.

By the way, there is no need to connect the intermediate coupling sections 36c of the plural coupling members 36 to each other via the extending sections 36d (need to couple the plural coupling members 36 to each other by the annular member 37). The plural coupling members 36 may be provided independently. Alternatively, only the intermediate coupling sections 36c of the particular coupling members 36 of the plural coupling members 36 may be connected to each other via the extending sections 36d.

The first rod-like coupling section 36a and the second rod-like coupling section 36b of each of the coupling members 36 are coupled to opposing surfaces of the first annular section 31 and the second annular section 32 (that is, a rear end surface of the first annular section 31 and a front end surface of the second annular section 32), respectively. The opposing surfaces oppose each other in the drum axial direction. The first rod-like coupling section 36a is integrally formed with the first annular section 31, and the second rod-like coupling section 36b is integrally formed with the second annular section 32.

As described above, the power transmission section 35 is configured to include the plural coupling members 36 as described above. Thus, compared to a case where the power transmission section 35 is an annular section like the second annular section 32, it is possible to significantly reduce weight and inertia of the drum 30.

In this embodiment, the first rod-like coupling section 36a, the second rod-like coupling section 36b, and the intermediate coupling section 36c of each of the coupling members 36 each have a rectangular cross-sectional shape. A thickness direction of each of the sections 36a, 36b, 36c is set to the radial direction of the drum 30. The thickness of each of the sections 36a, 36b, 36c is the same as thicknesses of the rear end portion of the first annular section 31 and the front end portion of the second annular section 32 (a thickness of the circumferential wall of the drum 30) .

In this embodiment, as illustrated in Fig. 4, when the power transmission section 35 transmits the power, torque T1 is applied to the first annular section 31 in a direction on one side in the drum circumferential direction, and the torque T2 (a magnitude of which is the same as that of the torque T1) is applied to the second annular section 32 in a direction on the other side in the drum circumferential direction. Corresponding thereto, the first rod-like coupling sections 36a and the second rod-like coupling sections 36b of all the coupling members 36 extend from the first annular section 31 side toward the second annular section 32 side in the drum axial direction in a manner to be tilted to the same side as the direction of the torque T1, which is applied to the first annular section 31, in the drum circumferential direction (a counterclockwise direction when seen from a rear side of the drum 30). The first rod-like coupling section 36a and the second rod-like coupling section 36b of each of the coupling members 36 are located in a twisted manner with respect to the center axis L of the drum 30.

Rotation moment is generated to each of the coupling members 36 by the torque T1, T2. As a result, the first rod-like coupling section 36a and the second rod-like coupling section 36b, each of which extends in the tilted manner, are twisted (rotated) in a parallel direction to the center axis L of the drum 30. A sum of lengths of the first rod-like coupling section 36a and the second rod-like coupling section 36b is larger than a clearance in the drum axial direction between the first annular section 31 and the second annular section 32 due to tilts thereof. Accordingly, the coupling members 36 are stretched and compressed between the first annular section 31 and the second annular section 32 by the torque T1, T2. As a result, compared to a case where tilt directions of the first rod-like coupling section 36a and the second rod-like coupling section 36b of each of the coupling members 36 are opposite from those in this embodiment (a case where the coupling members 36 are pulled), the coupling members 36 are strong against the torque T1, T2 and are thus less likely to be damaged.

Here, in the case where the coupling member 36 does not have the intermediate coupling section 36c and extends linearly from the first annular section 31 to the second annular section 32 (in the case where the first rod-like coupling section 36a and the second rod-like coupling section 36b are directly coupled to each other), stress is possibly concentrated on the end portion on the first annular section 31 side and the end portion on the second annular section 32 side (particularly, corner sections provided with rounded corner sections 41, 42, which will be described below) of the coupling member 36 by the torque T1, T2, and the end portion on the first annular section 31 side or the end portion on the second annular section 32 side of the coupling member 36 is possibly damaged.

However, in this embodiment, the first rod-like coupling section 36a and the second rod-like coupling section 36b are coupled to each other via the intermediate coupling section 36c that extends in the drum circumferential direction. Thus, when the coupling member 36 is twisted by the torque T1, T2, the intermediate coupling section 36c is deformed in the drum axial direction. As a result, the stress applied to the end portion on the first annular section 31 side and the end portion on the second annular section 32 side of the coupling member 36 is dispersed to the intermediate coupling section 36c, and the stress can thereby be reduced.

The number of the coupling members 36 is preferably reduced to be as small as possible in consideration of the magnitudes of the torque T1, T2 and strength of each of the coupling members 36.

In this embodiment, the rounded corner section 41 is provided as a reinforcing section that reinforces the corner section. The rounded corner section 41 is provided in the corner section between an opposing surface (the rear end surface) of the first annular section 31 and a surface on a side (the same side as the direction of the torque T1), which defines an acute angle with the opposing surface of the first annular section 31, of surfaces on one side and the other side in the drum circumferential direction of the first rod-like coupling section 36a of each of the coupling members 36. The corner section is reinforced by setting a curvature radius of this rounded corner section 41 to be equal to or larger than a specified value. Similarly, the rounded corner section 42 is provided as a reinforcing section in the corner section between an opposing surface (the front end surface) of the second annular section 32 and a surface on a side (the same side as the direction of the torque T2), which defines an acute angle with the opposing surface of the second annular section 32, of surfaces on one side and the other side in the drum circumferential direction of the second rod-like coupling section 36b of each of the coupling members 36. A curvature radius of the rounded corner section 42 is also set to be equal to or larger than a specified value (may be the same as or different from the specified value related to the curvature radius of the rounded corner section 41). That is, the rounded corner sections 41, 42 reinforce the portions where the damage is likely to occur (the portions where the stress is likely to be concentrated) in the coupling member 36 by the torque T1, T2 that are applied to the first annular section 31 and the second annular section 32, respectively.

The rounded corner sections 41, 42 are not essential components, and thus may not be provided. Alternatively, only one of the rounded corner sections 41, 42 may be provided.

Instead of constituting the above reinforcing section by the rounded corner section 41 (42), for example, a reinforcing member can be used. This reinforcing member couples the first annular section 31 and the first rod-like coupling section 36a (couples the second annular section 32 and the second rod-like coupling section 36b) in a manner to cover the front portion serving as the rounded corner section 41 (42) from the radially outer side or inner side of the drum 30.

In this embodiment, a rounded corner section 43 is also provided in a corner section (a corner section of a coupled portion between the first rod-like coupling section 36a and the intermediate coupling section 36c) between a front surface (a surface on the first annular section 31 side) of the annular member 37 and a surface, which defines an acute angle with the front surface of the annular member 37, of the surfaces on the one side and the other side in the drum circumferential direction of the first rod-like coupling section 36a of each of the coupling members 36. In this way, such a corner section is reinforced. Furthermore, a rounded corner section 44 is provided in a corner section (a corner section of a coupled portion between the second rod-like coupling section 36b and the intermediate coupling section 36c) between a rear surface (a surface on the second annular section 32 side) of the annular member 37 and a surface, which defines an acute angle with the rear surface of the annular member 37, of surfaces on one side and the other side in the drum circumferential direction of the second rod-like coupling section 36b of each of the coupling members 36. In this way, such a corner section is reinforced. These rounded corner sections 43, 44 may not be provided.

Accordingly, in this embodiment, each of the coupling members 36 has: the first rod-like coupling section 36a; the second rod-like coupling section 36b that is provided in the manner to be displaced in the drum circumferential direction and the drum axial direction with respect to the first rod-like coupling section 36a; and the intermediate coupling section 36c that couples the end portion on the second annular section 32 side of the first rod-like coupling section 36a to the end portion on the first annular section 31 side of the second rod-like coupling section 36b. When the coupling member 36 is twisted by the torque T1, T2 that are applied to the first annular section 31 and the second annular section 32, respectively, the intermediate coupling section 36c is deformed in the drum axial direction. As a result, the stress applied to the end portion on the first annular section 31 side and the end portion on the second annular section 32 side of the coupling member 36 is dispersed to the intermediate coupling section 36c, and the stress can thereby be reduced. Thus, even when the number of the coupling members 36 is reduced, it is possible to prevent the damage to the coupling members 36. Therefore, it is possible to significantly reduce the weight and the inertia of the drum 30 while the power transmission section 35 reliably transmits the power.

In this embodiment, the power transmission section 35 transmits the power, which has been transmitted to the second annular section 32, from the second annular section 32 to the first annular section 31. However, the power transmission section 35 may also transmit the power from the first annular section 31 to the second annular section 32. During the power transmission in this case, when the directions of the torque applied to the first annular section 31 and the second annular section 32 are the same as those in a case of the power transmission from the second annular section 32 to the first annular section 31, the configuration of the drum 30 in this embodiment can be adopted. Alternatively, the power may only be transmitted from the first annular section 31 to the second annular section 32. Also, in this case, the configuration of the drum 30 in this embodiment can be adopted. The tilt directions of the first rod-like coupling section 36a and the second rod-like coupling section 36b in the coupling member 36 may be set according to the directions of the torque applied to the first annular section 31 and the second annular section 32. In second and third embodiments, which will be described below, the directions of the torque applied to the first annular section 31 and the second annular section 32 are not restricted even when the power transmission from the second annular section 32 to the first annular section 31 and even when the power transmission from the first annular section 31 to the second annular section 32.

In this embodiment, the second rod-like coupling section 36b is offset to the same side as the direction of the torque T2 in the drum circumferential direction with respect to the first rod-like coupling section 36a. However, the second rod-like coupling section 36b may be offset to the same side as the direction of the torque T1 in the drum circumferential direction. In this case, the end portion on the second annular section 32 side of the second rod-like coupling section 36b is farther separated in the drum circumferential direction from the end portion on the first annular section 31 side of the first rod-like coupling section 36a. Accordingly, from a perspective of preventing the damage to the coupling member 36 by the torque T1, T2, in particular, in the case where the intermediate coupling sections 36c of the plural coupling members 36 are not connected to each other, the second rod-like coupling section 36b is preferably offset to the same side as the direction of the torque T2 in the drum circumferential direction with respect to the first rod-like coupling section 36a.

Furthermore, in this embodiment, each of the coupling members 36 is provided with the single first rod-like coupling section 36a and the single second rod-like coupling section 36b. However, in each of the coupling members 36, the plural first rod-like coupling sections 36a and/or the plural second rod-like coupling sections 36b may be provided.

Moreover, in this embodiment, the first rod-like coupling section 36a and the second rod-like coupling section 36b in the coupling member 36 are tilted. However, the first rod-like coupling section 36a and the second rod-like coupling section 36b may extend parallel to the center axis L of the drum 30. Also, in this case, the directions of the torque applied to the first annular section 31 and the second annular section 32 are not restricted.

### (Second Embodiment)

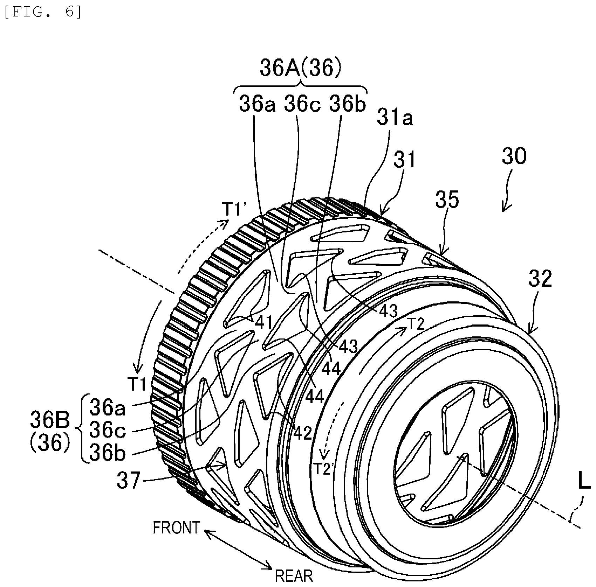

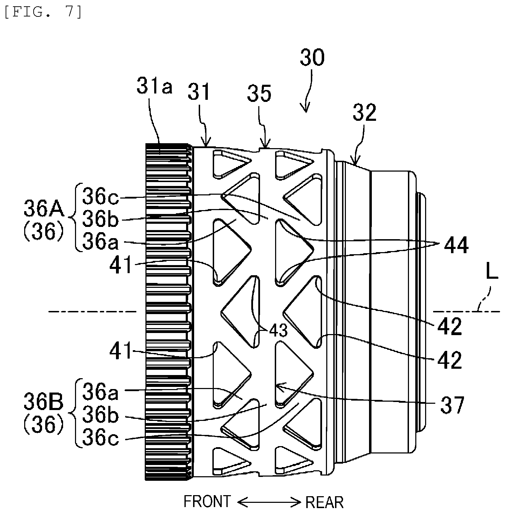

Fig. 6 and Fig. 7 illustrates the drum 30 according to the second embodiment (the same components as those in Fig. 4 and Fig. 5 will be denoted by the same reference signs, and the description thereon will not be made) in which the configuration of the power transmission section 35 differs from that in the first embodiment and in which, regardless of the directions of the torque applied to the first annular section 31 and the second annular section 32, the damage to the coupling member 36 by the torque is prevented.

The configuration of the drum 30 according to this embodiment can be applied to the clutch drum 6 and the clutch drum 7. However, the configuration of the drum 30 is preferably applied to a drum, in which an application state of the torque to the first annular section 31 and the second annular section 32 is one of a first state, which will be described below, or a second state, which will be described below, in the vehicular power transmission device. Thus, the configuration of the drum 30 is applied to such a drum. "Front" and "rear" of the drum 30 according to this embodiment are respectively the same as "front" and "rear" of the drum 30 according to the first embodiment.

More specifically, in this embodiment, differing from the first embodiment, the first state and the second state are provided during the power transmission by the power transmission section 35. In the first state, the torque T1 is applied to the first annular section 31 in the direction on the one side in the drum circumferential direction, and the torque T2 (= T1) is applied to the second annular section 32 in the direction on the other side in the drum circumferential direction. In the second state, torque T1', T2' (T1' = T2') is respectively applied to the first annular section 31 and the second annular section 32 in opposite directions from that in the first state. A first coupling member 36A and a second coupling member 36B are provided so as to be able to handle any of these first state and second state.

In order to be able to handle any of these first state and second state, of the plural (16 herein) coupling members 36, the first rod-like coupling section 36a and the second rod-like coupling section 36b of one or some of the coupling members 36 serve as the first coupling member 36A that extends from the first annular section 31 side toward the second annular section 32 side in the drum axial direction in the manner to be tilted to the one side (the same side as the first rod-like coupling section 36a and the second rod-like coupling section 36b of the coupling member 36 in the first embodiment) in the drum circumferential direction, and the first rod-like coupling section 36a and the second rod-like coupling section 36b of the rest of the coupling member(s) 36 serve as the second coupling member 36B that extends from the first annular section 31 side toward the second annular section 32 side in the drum axial direction in the manner to be tilted to the other side (the opposite side from the first rod-like coupling section 36a and the second rod-like coupling section 36b of the coupling member 36 in the first embodiment) in the drum circumferential direction. In this embodiment, the same number (eight each) of the plural first coupling members 36A and the plural second coupling members 36B are provided.

In the case where magnitudes of the torque T1', T2' in the second state differ from the magnitudes of the torque T1, T2 in the first state, the number of the first coupling members 36A and the number of the second coupling members 36B may differ from each other. The number of the first coupling member 36A or the second coupling member 36B may be one.

In the first coupling member 36A, the second rod-like coupling section 36b is offset to the same side as the direction of the torque T2 in the drum circumferential direction with respect to the first rod-like coupling section 36a. Meanwhile, in the second coupling member 36B, the second rod-like coupling section 36b is offset to the same side as the direction of the torque T1 in the drum circumferential direction with respect to the first rod-like coupling section 36a.

In this embodiment, similar to the coupling members 36 in the first embodiment, the plural first coupling members 36A are arranged at spaced intervals in the drum circumferential direction on an imaginary cylindrical surface that is similar to that in the first embodiment. Each of the plural second coupling members 36B is arranged between the two mutually-adjacent first coupling members 36A in the drum circumferential direction. In the first annular section 31, a portion, which is coupled to the first rod-like coupling section 36a of each of the second coupling members 36B is coupled, is coupled to the first rod-like coupling section 36a of the first coupling member 36A, which is located on the same side as the direction of the torque T1, of the two first coupling members 36A holding such a second coupling member 36B therebetween. In the second annular section 32, a portion, which is coupled to the second rod-like coupling section 36b of each of the second coupling members 36B, is coupled to the second rod-like coupling section 36b of the first coupling member 36A, which is located on the same side as the direction of the torque T2, of the two first coupling members 36A holding such a second coupling member 36B therebetween in the drum circumferential direction.

Furthermore, a coupled portion between the intermediate coupling section 36c and the first rod-like coupling section 36a of each of the second coupling members 36B is coupled to a coupled portion between the intermediate coupling section 36c and the first rod-like coupling section 36a of the first coupling member 36A, which is located on the same side as the direction of the torque T2, of the two first coupling members 36A holding such a second coupling member 36B therebetween in the drum circumferential direction. Moreover, a coupled portion between the intermediate coupling section 36c and the second rod-like coupling section 36b of each of the second coupling members 36B is coupled to a coupled portion between the intermediate coupling section 36c and the second rod-like coupling section 36b of the first coupling member 36A, which is located on the same side as the direction of the torque T1, of the two first coupling members 36A holding such a second coupling member 36B therebetween in the drum circumferential direction. As a result, also in this embodiment, similar to the first embodiment, the intermediate coupling sections 36c of the plural coupling members 36 (the first coupling members 36A and the second coupling members 36B) are connected to each other to serve as the annular member 37 that extends in the entire drum circumferential direction. The first rod-like coupling sections 36a, the second rod-like coupling sections 36b, and the intermediate coupling sections 36c of the first coupling members 36A and the second coupling members 36B constitute a truss structure. However, the first rod-like coupling sections 36a, the second rod-like coupling sections 36b, and the intermediate coupling sections 36c do not always have to constitute the truss structure.

Similar to the first embodiment, the rounded corner sections 41, 42 are respectively provided to the corner section between the opposing surface of the first annular section 31 and the surface, which defines the acute angle with the opposing surface of the first annular section 31, of the surfaces on the one side and the other side in the drum circumferential direction of the first rod-like coupling section 36a of each of the coupling members 36 (each of the first coupling members 36A and each of the second coupling members 36B) and the corner section between the opposing surface of the second annular section 32 and the surface, which defines the acute angle with the opposing surface of the second annular section 32, of the surfaces on the one side and the other side in the drum circumferential direction of the second rod-like coupling section 36b of each of the coupling members 36.

In addition, the rounded corner sections 43, 44 are respectively provided to the corner section between the front surface of the annular member 37 and the surface on the side, which defines the acute angle with the front surface of the annular member 37, of the surfaces on the one side and the other side in the drum circumferential direction of the first rod-like coupling section 36a of each of the coupling members 36 and the corner section between the rear surface of the annular member 37 and the surface on the side, which defines the acute angle with the rear surface of the annular member 37, of the surfaces on the one side and the other side in the drum circumferential direction of the second rod-like coupling section 36b of each of the coupling members 36.

In this embodiment, regardless of whether the application state of the torque to the first annular section 31 and the second annular section 32 is the first state or the second state, it is possible to effectively prevent the damage to the coupling members 36 (the first coupling members 36A and the second coupling members 36B) by the torque applied to the first annular section 31 and the second annular section 32. In addition, similar to the first embodiment, the annular member 37 can prevent the damage to the coupling members 36 by the centrifugal force.

Furthermore, in this embodiment, the first rod-like coupling sections 36a, the second rod-like coupling sections 36b, and the intermediate coupling sections 36c of the coupling members 36 (the first coupling members 36A and the second coupling members 36B) constitute the truss structure. Accordingly, the damage to the coupling members 36 by the torque applied to the first annular section 31 and the second annular section 32 and the damage to the coupling members 36 by the centrifugal force are further less likely to occur. Thus, it is possible to reduce the number of the first coupling members 36A and the second coupling members 36B by a reduction in a chance of the damage.

The present invention is not limited to the above embodiments and can be substituted with another embodiment within the scope that does not depart from the gist of the claims.

For example, in the above embodiment, the example in which the configuration of the drum 30 (particularly, the drum 30 according to the first embodiment) is applied to the clutch drum 6 of the second clutch 21 and the clutch drum 7 of the third clutch 22 in the automatic transmission 1 has been described. However, the configuration of the drum 30 can be applied to any type of the drum including the drum (the brake drum or the clutch drum) of the friction fastening element as long as the drum is a cylindrical drum that transmits the power in the rotational direction. For example, the coupling member 5 of the automatic transmission 1 is constructed of the drum, and an axial length of the drum is longer than that of the clutch drums 6, 7. Accordingly, the configuration of the drum 30 may be applied to such a drum in order to reduce weight and inertia of the drum (the coupling member 5) . In addition, the configuration of the drum 30 can also be applied to the drum of the vehicular power transmission device other than the automatic transmission 1.

The above-described embodiments are merely illustrative, and thus the scope of the present invention should not be interpreted in a restrictive manner. The scope of the present invention is defined by the claims, and all modifications and changes falling within equivalents of the claims fall within the scope of the present invention.

### Industrial Applicability

The technique of the present disclosure is useful for the vehicular power transmission device that includes the cylindrical drum for transmitting the power in the rotational direction, and is particularly useful for the automatic transmission that includes the clutch drum and/or the brake drum in the large diameter and the heavy weight.

### Reference Signs List

1: Automatic transmission (vehicular power transmission device)
6: Clutch drum of second clutch
7: Clutch drum of third clutch
30: Drum
31: First annular section
32: Second annular section
35: Power transmission section
36: Coupling member
36a: First rod-like coupling section
36b: Second rod-like coupling section
36c: Intermediate coupling section
37: Annular member
41: Rounded corner section (reinforcing section)
42: Rounded corner section (reinforcing section)

## Claims

1. A vehicular power transmission device comprising:
a cylindrical drum that transmits power in a rotational direction,
wherein the drum has: a first annular section and a second annular section that are located at two mutually-separated positions in an axial direction of said drum; and a power transmission section between the first annular section and the second annular section, the power transmission section transmitting the power input to said first annular section or said second annular section,
wherein the power transmission section is configured to include plural coupling members that are arranged around a center axis of the drum and couple the first annular section and the second annular section, and
wherein each of the coupling members has:
a first rod-like coupling section that is coupled to the first annular section and extends from said first annular section toward the second annular section;
a second rod-like coupling section that is provided in a manner to offset in a circumferential direction and the axial direction of the drum with respect to the first rod-like coupling section, is coupled to the second annular section, and extends from said second annular section toward the first annular section; and
an intermediate coupling section that couples an end portion on the second annular section side of the first rod-like coupling section and an end portion on the first annular section side of the second rod-like coupling section.

2. The vehicular power transmission device according to claim 1,
wherein the intermediate coupling section is formed integrally with the first rod-like coupling section and the second rod-like coupling section.

3. The vehicular power transmission device according to claim 1 or 2,
wherein, during the power transmission by the power transmission section, torque is applied to the first annular section in a direction on one side in the circumferential direction, and torque is applied to the second annular section in a direction on the other side in the circumferential direction, and
wherein, the first rod-like coupling sections and the second rod-like coupling sections of all the coupling members extend from the first annular section side toward the second annular section side in the axial direction in a manner to be tilted to the same side as the direction of the torque applied to the first annular section in the circumferential direction.

4. The vehicular power transmission device according to claim 1 or 2,
wherein a first state and a second state are provided during the power transmission by the power transmission section, in the first state, the torque is applied to the first annular section in the direction on the one side in the circumferential direction and the torque is applied to the second annular section in the direction on the other side in the circumferential direction, and in the second state, the torque is applied to said first annular section and said second annular section in opposite directions from those in the first state, and
wherein, while the first rod-like coupling section and the second rod-like coupling section of some coupling member of the plural coupling members extend from the first annular section side toward the second annular section side in the axial direction in a manner to be tilted to the one side in the circumferential direction, the first rod-like coupling section and the second rod-like coupling section of the rest of the coupling member extend from the first annular section side toward the second annular section side in the axial direction in a manner to be tilted to the other side in the circumferential direction.

5. The vehicular power transmission device according to claim 3 or 4,
wherein the first rod-like coupling section and the second rod-like coupling section of each of the coupling members are coupled to mutually-opposing surfaces in the axial direction of the first annular section and the second annular section, and
wherein a reinforcing section is provided to a corner section between the opposing surface of the first annular section and a surface on a side, which defines an acute angle with the opposing surface of said first annular section, of surfaces on the one side and the other side in the circumferential direction of the first rod-like coupling section in each of the coupling members and/or a corner section between the opposing surface of the second annular section and a surface on a side, which defines an acute angle with the opposing surface of said second annular section, of surfaces on the one side and the other side in the circumferential direction of the second rod-like coupling section in each of the coupling members.

6. The vehicular power transmission device according to any one of claims 1 to 5,
wherein the intermediate coupling sections of the plural coupling members are connected to each other to serve as an annular member that extends in the entire circumferential direction of the drum.
